Europäisches Patentamt

**European Patent Office**

**Office européen des brevets**

(11) Veröffentlichungsnummer: **0 238 001**

**A2**

## (12) EUROPÄISCHE PATENTANMELDUNG

(21) Anmeldenummer: **87103750.3**

(22) Anmeldetag: **14.03.87**

(51) Int. Cl.⁴: **C08F 210/10** ,
//C08F8/30,C08F8/04,C08G18/0-
0,C08G59/00,(C08F210/10,212:-
14)

(30) Priorität: **18.03.86 DE 3608975**

(43) Veröffentlichungstag der Anmeldung:
**23.09.87 Patentblatt 87/39**

(84) Benannte Vertragsstaaten:
**AT BE DE FR GB NL**

(71) Anmelder: **BASF Aktiengesellschaft**
**Carl-Bosch-Strasse 38**
**D-6700 Ludwigshafen(DE)**

(72) Erfinder: **Bronstert, Klaus, Dr.**
**Gartenstrasse 26**
**D-6719 Carlsberg(DE)**
Erfinder: **Fuessl, Ruediger**
**Neubergstrasse 30**
**D-6730 Neustadt(DE)**
Erfinder: **Schuster, Ludwig, Dr.**
**Weinheimer Strasse 44**
**D-6703 Limburgerhof(DE)**

(54) **Copolymerisate des Isobutylens mit Nitro- und/oder Aminostyrol, deren Herstellung und Verwendung.**

(57) Die Erfindung betrifft Copolymerisate des Isobutylens, bestehend aus Isobutylen, gegebenenfalls
einem Aminovinylaromaten und gegebenenfalls einem Nitrovinylaromaten, ein Verfahren zur Herstellung
der Copolymerisate des Isobutylens bei dem das
entsprechende Isobutylen-Vinylaromat-Copolymerisat zunächst nitriert und gegebenenfalls dann hydriert wird sowie die Verwendung der Aminogruppen
enthaltenden Isobutylencopolymerisate zur Herstellung der entsprechenden Polyurethane bzw. Epoxidharze.

EP 0 238 001 A2

## Copolymerisate des Isobutylens mit Nitro-und/oder Aminostyrol, deren Herstellung und Verwendung

Copolymerisate des Isobutylens mit Nitro- und/oder Aminovinylaromaten lassen sich durch Copolymerisation aus den entsprechenden Monomeren nicht herstellen. Bekannt ist lediglich ein Verfahren zur Herstellung von festen, in Lösungsmitteln unlöslichen Überzügen aus nitrierten Isobutylen-Styrol-Copolymerisaten mit relativ hohen Styrolgehalten von mehr als 60 Gew.% (vgl. US-A-3 375 147).

Aufgabe der Erfindung war es, in organischen Lösungsmitteln lösliche Copolymerisate des Isobutylens mit Nitro-und/oder Aminovinylaromaten zu - schaffen. Eine weitere Aufgabe war die Verwendung der Copolymerisate aus Isobutylen und Aminovinylaromaten zur Herstellung von Polyurethanen oder Epoxidharzen.

Diese Aufgaben wurden durch die Isobutylencopolymerisate gemäß Ansprüche 1 und 2, durch ein Verfahren zur Herstellung der Isobutylencopolymerisate nach Anspruch 3 und die Verwendung der Copolymerisate des Isobutylens mit Aminovinylaromaten zur Herstellung der entsprechenden Polyurethane bzw. Epoxidharze gelöst.

Unter Amino-bzw. Nitrovinylaromaten werden die Substitutionsprodukte verstanden, die sich vom Styrol, Vinylnaphthalin, Vinylanthracen etc. ableiten. Besonders bevorzugt sind die Nitro-und/oder Aminogruppen enthaltenden Styrole. In den Isobutylencopolymerisaten sind 40 bis 99, bevorzugt 30 bis 70 Gewichtsteile Isobutylen, 0 bis 40, bevorzugt 0 bis 30 Gewichtsteile Aminovinylaromatcomonomer und 0 bis 40, bevorzugt 0 bis 30 Gewichtsteile eines Nitrovinylaromatcomonomeren einpolymerisiert, wobei die Summe der Gewichtsteile der Comonomeren größer als eins und gleich oder kleiner als 40 sein muß. Die Isobutylencopolymerisate weisen Molekulargewichte -bestimmt durch Gelpermeations-Chromatographie -von 700 bis 200 000, bevorzugt von 5000 bis 100 000, auf. Die Bestimmung des Molekulargewichts wird durch Vergleich mit einer an Polystyrol geeichten Meßkurve vorgenommen.

Bevorzugt sind Copolymerisate des Isobutylens bestehend aus 60 bis 99, bevorzugt 70 bis 97 Gewichtsteilen Isobutylen und 1 bis 40, bevorzugt 3 bis 30 Gewichtsteilen eines Aminostyrols.

Die erfindungsgemäßen Isobutylencopolymerisate sind in organischen Lösungsmitteln löslich.

Die kontinuierliche Herstellung von Copolymeren des Isobutylens mit Styrol oder seinen Derivaten ist bekannt. Sie wird z.B. in der DE-A-33 00 155, US-A-3 071 567, US-A-3 01 608 oder GB-A-1 130 680 beschrieben. Dazu werden Gemische aus Isobutylen und Styrol, deren Zusammensetzung der des herzustellenden Copolymeren entspricht, in Abwesenheit oder in Gegenwart eines Lösungsmittels kationisch polymerisiert. Als Katalysatoren sind vorwiegend Lewis-Säuren geeignet. Für die Herstellung der für das vorliegende Verfahren benötigten Ausgangspolymeren eignet sich jedoch vorzugsweise eine diskontinuierliche Polymerisation in Gegenwart eines niedrig siedenden Kohlenwasserstoffes mit dem Katalysatorsystem AlCl₃ oder Aluminium-Alkyldihalogenid oder Aluminumdialkylhalogenid und Alkylhalogenid, wobei darauf zu achten ist, daß während der Polymerisation kein flüchtiges Monomeres aus dem Reaktor entweicht.

Besonders bevorzugt ist das Katalysatorsystem AlEtCl₂ + t-Butylchlorid. Mit diesem können 30.000 g Copolymerisat oder mehr je g Katalysator hergestellt werden, so daß eine Abtrennung von Katalysatorresten entfallen kann. Als Lösungsmittel geeignet sind Propan und Butan, mit denen die Reaktionswärme der sehr schnell ablaufenden Polymerisation durch Siedekühlung besonders gut abgeführt werden kann. Besonders bevorzugt ist n-Butan. Durch Rückführung des Kondensates und gute Durchmischung des Reaktorinhaltes werden Copolymere mit homogener Zusammensetzung und enger Molekulargewichtsverteilung erhalten.

Von den möglichen Comonomeren ist Styrol besonders gut geeignet, da es unter den Versuchsbedingungen im gleichen Verhältnis in das Copolymerisat eingebaut wird, in dem es in der Monomerenmischung vorliegt. Die Copolymerisate sind daher transparent und nicht trüb, wie dies - schon der Fall ist, wenn eine Copolymerisatmischung mit kleinen Differenzen der Zusammensetzung vorliegen würde. Solche homogenen Copolymerisate sind zur Herstellung der erfindungsgemäßen Copolymerisate besonders gut geeignet.

Für die Verwendung der erfindungsgemäßen Copolymeren in Polymermischungen bzw. als Bestandteil von Polyurethanen ist anzustreben, daß mindestens eine, besser zwei Nitro-bzw. Aminogruppen je Molekül vorhanden sind. Entsprechend ist zur Erreichung der gewünschten Eigenschaften bei niederen Molekulargewichten ein höherer Styrolgehalt erforderlich als bei hohen Molekulargewichten.

Im allgemeinen wird der optimale Styrolgehalt durch empirische Untersuchungen festgestellt. Die obere Grenze liegt für plastische Massen nicht höher als ca. 30 Gew.%, weil sich oberhalb dieser Grenze die elastischen Eigenschaften der Copolymerisate bei Zimmertemperatur verlieren und die Copolymerisate in organischen Lösungsmitteln unlöslich sind.

Für andere Einsatzgebiete kann auch ein höherer Styrolgehalt, jedoch nicht über 40 Gew.%, zweckmäßig sein.

Das Molekulargewicht der Copolymeren kann durch Polymerisationsbedingungen, Monomerkonzentration und Katalysatoren in weiten Grenzen eingestellt werden. Höhere Temperaturen und niedrige Monomerkonzentrationen ergeben tiefe, Polymerisationstemperaturen und hohe Monomerkonzentration hohe Molekulargewichte. Benützt man Katalysatorsysteme auf Basis von Bortrifluorid oder Bortrichlorid, so werden Molekulargewichte erhalten, die 1/10 oder weniger der mit Aluminiumhalogenalkylen erhaltenen betragen.

Die Nitrierung der Isobutylen-Styrol-Copolymerisaten erfolgt nach an sich bekannten Methoden. Es ist vorteilhaft, die Copolymerisate hoher Viskosität zunächst in geeigneten Lösungsmitteln zu lösen, um eine vollständige Umsetzung mit dem Nitrierungsreagenz zu erreichen. Um Explosionen zu vermeiden, sollten inerte Lösungsmittel mit geringem Dampfdruck verwendet werden. Am besten geeignet sind halogenierte Lösungsmittel, z.B. die Chlorierungsprodukte des Ethans, Ethylens oder des Methans. Besonders gut geeignet ist Tetrachlorkohlenstoff, das unter den Nitrierungsbedingungen keine Veränderung erfährt und das Ausgangspolymerisat wie das Nitrierungsprodukt gut löst.

Vorzugsweise wird die Einführung von einer Nitrogruppe je Styroleinheit angestrebt. Das wird z.B. durch Umsetzung des Copolymerisats mit 1 bis 8 Mol 100 gew.%iger Salpetersäure je Mol Styrol, vorzugsweise mit 2 bis 6 Mol, erreicht. Geeignete Temperaturen liegen zwischen 20 und 70°C. Gegebenenfalls kann jedoch auch ein geringerer oder höherer Gehalt an Nitrogruppen zweckmäßig sein.

In Tetrachlorkohlenstoff wird z.B. bei 45°C und Zugabe von 4 Mol Salpetersäure/Mol gebundenes Styrol bereits nach einer halben Stunde vollständiger Umsatz zur Mononitroverbindung erreicht. Es ist durch Vergleich der Molgewichtsverteilung des Ausgangspolymeren mit dem Reaktionsprodukt festgestellt worden, daß das Polymerisatmolekül diese Operation ohne oxidativen Abbau übersteht.

Das Entfernen der überschüssigen Salpetersäure aus dem Reaktionsgemisch kann z.B. durch Waschen mit Wasser erfolgen. Hierbei treten jedoch häufig Emulsionen auf, die die Aufarbeitung erschweren. Als elegant erwies sich das Abdestillieren der überschüssigen Salpetersäure als Azeotrop mit dem Lösungsmittel bei partiellem Vakuum. Anschließend kann das restliche Lösungsmittel durch Abdampfen oder Fällen des Copolymerisats, z.B. mit Methanol oder anderen Alkoholen, entfernt werden.

Die nitrierten Copolymerisate sind bei den niedrigen Styrolgehalten bis ca. 30 Gew.% transparente, mehr oder weniger gelbgefärbte Produkte. Nur bei Styrolgehalten von größer als 50 Gew.% im Ausgangscopolymerisat erhält man feste und kristallin-opake Massen.

Die Hydrierung der nitrierten Copolymerisate wird vorteilhaft in Kohlenwasserstoffen, am besten in polaren Lösungsmitteln wie Tetrahydrofuran oder Dioxan durchgeführt.

Dazu ist gegebenenfalls die vollständige Entfernung des chlorierten Lösungsmittels erforderlich. Dieses kann z.B. destillativ erfolgen, indem man höher siedende Kohlenwasserstoffe als Schleppmittel verwendet. Geeignet sind z.B. Octan, Dekan, Ligroin und ähnliche. Der Chlorgehalt der Lösung der nitrierten Polymeren sollte kleiner als 1000 ppm, vorzugsweise weniger als 50 ppm betragen.

Die Umwandlung der im Copolymerisat gebundenen Nitrogruppe in Aminogruppen ist wesentlich schwieriger zu realisieren als bei niedermolekularen Nitroverbindungen. Außerdem muß bei ihrer Reduktion eine Vernetzung der Copolymeren vermieden werden. Als geeignet erwies sich die katalytische Hydrierung mit Wasserstoff bei Temperaturen zwischen 100 und 270°C, vorzugsweise 150 bis 260°C und Wasserstoffdrücken von 10 bis 500 atü, vorzugsweise 30 bis 300 atü. Als Katalysatoren besonders geeignet sind Palladiummohr, Rhodium und Rutheniumverbindungen, Raney-Nickel sowie Nickelacetylacetonat, gegebenenfalls in Kombination mit Aluminiumalkylen.

Als Lösungsmittel für die Hydrierung sind geeignet u.a. Kohlenwasserstoffe wie Octan, Dekan, Ligroin, Tetralin, Dekalin, ferner Tetrahydrofuran oder Dioxan. Tetrahydrofuran darf jedoch nicht höher als 220°C erhitzt werden, Dioxan muß eventuell zur Verbesserung der Lösungseigenschaften in Mischung mit Kohlenwasserstoffen verwendet werden. Außerdem kann es zweckmäßig sein, der Lösung während der Hydrierung zur Unterdrückung einer Vernetzung Ammoniak zuzusetzen.

Je nach den Reaktionsbedingungen werden 40 bis 100 Gew.% der Nitrogruppen in Aminogruppen überführt. Bis zu 260°C bleibt die Molekulargewichtsverteilung der Ausgangscopolymerisate erhalten, darüber sinken das Molekulargewicht und der Stickstoffgehalt der Copolymerisate ab, so daß Temperaturen über 270°C nicht zweckmäßig sind.

Nach der Hydrierung wird der Katalysator durch Filtration, gegebenenfalls unter Verwendung von Filterhilfsmitteln entfernt. Gegebenenfalls kann auch Waschen der Lösung mit komplexierenden Reagentien wie Ethylendiamintetraessigsäure oder anderen zweckmäßig sein.

Die Hydrierung verläuft häufig nicht mit vollständigem Umsatz. Typisch sind Umwandlungsraten der Nitrogruppen zwischen 60 und 90 Gew.%.

Die hydrierten, aus ihren Lösungen isolierten Copolymerisate sind bei richtiger Reaktionsführung hellgelb bis dunkelbraun gefärbte klebrige Massen mit kaltem Fluß, die rückstandslos in Kohlenwasserstoffen und vielen anderen Lösungsmitteln löslich sind.

Die Aminogruppen enthaltenden Copolymerisate können als Precurser für Polyurethane, als Zwischenprodukte für polymere Isocyanate und Modifizierung anderer Kunststoffe verwendet werden.

Sie können z.B. mit Di-oder Triisocyanaten je nach Zusammensetzung zu weich-oder hartelastischen Massen vernetzt werden. Insbesondere Elastomere mit Styrolgehalten der Ausgangscopolymerisate von kleiner als 30 Gew.%, vorzugsweise kleiner als 15 Gew.%, besonders kleiner als 10 Gew.% zeigen Diffusionswiderstände für Wasserdampf und andere Gase die vergleichbar sind mit den Werten, die bei Polyisobutylen gemessen werden.

In den folgenden Beispielen wird die Erfindung erläutert, ohne ihren Umfang einzuschränken.

Herstellung von Isobutylen-Styrolcopolymerisaten:

Polymer 1

Ein mit Kühlmantel, wandgängigem Ankerrührer, einem mit Sole von -40°C beschickten Rückflußkühler und Dosiereinrichtungen für zwei Katalysatorkomponenten ausgerüsteter 10 Liter-Reaktor wird zur Entfernung von Katalysatorgiften mit einer Lösung von Al(Et)₃ in Cyclohexan ausgekocht. Nach Ablassen dieser Lösung wird er mit 1426 cm³ = 891 g Isobutylen, 67 g unstabilisiertem Styrol und 800 cm³ n-Butan beschickt. Diese Substanzen wurden zuvor durch Filtration über Molekularsieb 3 A 574 (Lieferant Fa. Grace GmbH) von die Copolymerisation störenden Verunreinigungen und Feuchtigkeit befreit. Die Copolymerisation wird bei einem partiellen Vakuum von 467 mb und gutem Rühren durch gleichzeitige tropfenweise Dosierung einer 0,01 molaren Lösung von AlEtCl₃ und einer 0,01 molaren Lösung von t-Butylchlorid in n-Octan in Gang gesetzt, wobei die Reaktionswärme durch Siedekühlung abgeführt wird. Die Reaktion ist nach Zugabe von jeweils 24 cm³ und nach 75 min. vollständig, wobei die Monomeren restlos umgesetzt werden. Es wurde eine Katalysatorproduktivität von 31000 g Copolymerisat/g AlEtCl₂ erreicht. Die Copolymerisatlösung wird in einen zweiten, gerührten, mit Rückflußkühler versehenen 5 Liter-Reaktor abgelassen, der zuvor mit 1000 cm³ n-Octan und 5 cm³ Methanol beschickt wurde. Zur vollständigen Entfernung des Butans und des Methanols wird der Inhalt so lange gekocht, bis der Siedepunkt des Lösungsmittels erreicht ist.

Eigenschaften des Copolymerisats: Farbloses und transparentes Harz mit kaltem Fluß;
Mw/Mn = 3,5;
Staudingerindex Jo = 48
Styrolgehalt: 7 Gew.%

(Der Zahlenwert des Staudingerindexes Jo in $cm^3g^{-1}$ entspricht dem 100-fachen der früher gebräuchlichen Grenzviskositätszahl [$\eta$] (dl/g) und ist identisch mit der sog. limiting viscosity number, die als Ersatz für die intrinsic viscosity eingeführt worden ist.)

Polymer 2

In gleicher Weise wie oben, jedoch bei Normaldruck (1020 mb) wird eine Mischung aus 1426 cm³ Isobutylen (891 g), 67 g Styrol in 500 cm n-Butan polymerisiert. Katalysatorproduktivität: 25000 g Copolymerisat/g AlEtCl₂; Für die Aufarbeitung werden 1000 cm³ Tetrachlorkohlenstoff an Stelle des n-Octans verwendet.

Eigenschaften des Copolymerisats: Farbloses, transparentes, klebriges Harz mit kaltem Fluß;
Mw/Mn = 4,5;
Staudingerindex Jo = 26,5;
Styrolgehalt: 7 Gew.%.

Polymer 3

Wie bei Polymer 2 wird eine Mischung aus 1450 cm³ Isobutylen (856 g), 45 g Styrol in 500 cm³ n-Butan bei Normaldruck (1020 mb) polymerisiert. Katalysatorproduktivität: 50000 g Copolymerisat/g AlEtCl₂;

Eigenschaften des Copolymerisats: Farbloses, transparentes, klebriges Harz mit kaltem Fluß;
Mw/Mn = 4,5;
Staudingerindex Jo = 33;
Styrolgehalt: 5 Gew.%.

Nitrierung des Polymeren

a) 1000 g des Polymer 1 (7 Gew.% Styrolgehalt) in 1000 g n-Octan werden bei 30°C mit 111 cm³ 100 gew.%iger Salpetersäure (4 Mol je Mol Styrol) versetzt. Die Temperatur steigt unter Entwicklung nitroser Gase auf 50°C. Nach 3 Stunden wird abgekühlt, 3 mal mit 1000 cm³ Wasser, dann mit Natriumbicarbonatlösung neutral gewaschen. Da die Abtrennung der wäßrigen und organischen Phase infolge Bildung einer Emulsion unvollständig ist, gehen Anteile des Copolymerisats verloren. Anschließend wird das Lösungsmittel durch Wasserdampfdestillation abgetrieben. Das verbleibende Copolymerisat wird in einer mit Silikonpapier ausgekleideten Schale im Vakuum bei 80°C getrocknet.

Ausbeute: 880 g eines bernsteinfarbenen, transparenten, klebrigen Polymeren.
Stickstoffgehalt nach Kjedahl: 0,8 Gew.% (Th. für 1 Mol $NO_2$ je Mol eingebautes Styrol: 0,91 Gew.%).

b) 1000 g Polymer (7 Gew.% Styrolgehalt) in 1000 cm³ Tetrachlorkohlenstoff werden bei 50°C mit 111 cm³ 100 gew.%iger Salpetersäure versetzt. Die Temperatur steigt unter Entwicklung nitroser Gase auf 70°C an. Nach zwei Stunden destilliert man unter Rühren die nicht umgesetzte Salpetersäure bei partiellem Vakuum im Azeotrop mit dem Lösungsmittel so ab, daß 60°C Sumpftemperatur nicht überschritten wird. Der abdestillierte Tetrachlorkohlenstoff wird so lange durch frisches ersetzt, bis das Waschwasser einer Probe des Destillates pH 6 anzeigt. Nun wird das Lösungsmittel unter gutem Rühren bei 10 mb und bis auf 100°C steigender Temperatur der Schmelze abdestilliert. Um den Tetrachlorkohlenstoff vollständig zu verdrängen, wird die Schmelze 2 mal mit je 200 cm³ Octan versetzt und jeweils der Tetrachlorkohlenstoff bei 1 mb so lange abdestilliert, bis die Temperatur in der Schmelze auf 110°C gestiegen ist.

Ausbeute: 990 g eines klebrigen, transparenten Copolymerisats,
Chlorgehalt: 60 Gew.%;
Flüchtige Anteile bei 210°C und 1 mb: 2,5 Gew.%;
Stickstoffgehalt nach Kjedahl: 0,9 Gew.% (Theorie 0,91 Gew.%);
Sauerstoffgehalt: 1,9 Gew.% (Theorie 2,09 Gew.%);
Staudingerindex Jo = 26,2.
c) Wie unter b) beschrieben, wird das Polymer 3 (5 Gew.% Styrolgehalt) nitriert. Es wird ein bernsteinfarbenes, transparentes, klebriges Harz erhalten.

Analytische DatenStickstoffgehalt nach Kjedahl: 0,60 Gew.% (Theorie 0,67 Gew.%);
Sauerstoffgehalt: 1,4 Gew.% (Theorie 1,52 %);
Staudingerindex Jo = 33;
Chlorgehalt: 30 Gewichts-ppm.

Hydrierung der Polymeren

a) 35 g Polymer 2 in 65 g n-Octan werden in einen 300 cm³ Edelstahlautoklaven mit Magnetrührer gefüllt. Nach Spülung mit Stickstoff werden zu dieser Lösung 5 cm³ einer Katalysatorlösung gegeben, die wie folgt hergestellt wird:

Zu 0,7 g Nickelacetylacetonat, gelöst in 77 cm³ Toluol werden unter Stickstoff 10 cm³ einer 20 gew.%igen Lösung von Al(Et)₃ gegeben.

Der Autoklav wird 3 mal durch Aufpressen von Wasserstoff auf 100 atü und Entspannen gespült. Dann wird mit 300 atü Wasserstoff 10 Stunden bei 240°C hydriert. Nach Abkühlen und Entspannen wird über Bleicherde filtriert, das Polymerisat durch Einrühren in 500 cm³ Ethanol gefällt, zur Reinigung mit 100 cm³ Ethanol geknetet und in einer mit silikonisiertem Papier ausgelegten Schale bei 80°C und 1 mb im Vakuum getrocknet.

Ausbeute: 17 g eines schwarzbraun gefärbten Polymerisats.
Ni-Gehalt: 0,03 Gew.%
Basenstickstoff * : 0,64 Gew.%
Staudingerindex Jo = 26,5
b) Der Versuch a wird wiederholt, jedoch werden als Katalysator 200 mg Palladium-Aktivkohle Typ E 10 N/D (10 Gew.% Pd-Gehalt, Lieferant Degussa) verwendet, 5 cm³ flüssiges Ammoniak zugesetzt und bei 260°C hydriert.

Ausbeute: 30 g eines schwarzbraun gefärbten Polymeren.
Basenstickstoff * : 0,69 Gew.%
Staudingerindex Jo = 26,4
c) Der Versuch a) wird mit 5 g Raney-Nickel und 5 cm³ Ammoniak sowie 10 Stunden bei 260°C wiederholt. Es werden 27 g eines schwarzbraunen Polymerisates isoliert.

Basenstickstoff * : 0,65 Gew.%

*Siehe nächste Seite

Staudingerindex Jo = 26,5

$$\text{Gew.\% N} = \frac{\text{ml HClO}_4\text{-Lösung} \times 0,14}{\text{g Einwaage}}$$

d) Der Versuch a) wird wiederholt, jedoch wird mit 20 mg Nickelacetylacetonat 10 Stunden in Gegenwart von 5 cm³ Ammoniak bei 260°C hydriert. Es werden 32 g eines schwarzbraunen Polymerisats erhalten.

Basenstickstoff: 0,66 Gew.%
Staudingerindex Jo = 26,5

e) 900 g des nitrierten Polymerisats 2 in 2100 g n-Octan werden nach Verdrängen der Luft mit Wasserstoff mit 180 cm³ flüssigem Ammoniak gemischt. Nach Eindrücken einer Lösung von 1,5 g Nickelacetylacetonat in 15 cm³ Toluol wird 10 Stunden bei 260°C und 300 atü Wasserstoff hydriert. Nach Entspannen und Abtreiben des Ammoniaks wird die Lösung in einem Druckfilter durch eine 1 cm³ hohe Schicht von Bleicherde filtriert. Das Polymerisat wird durch Eingießen in 10 l Ethanol gefällt und bei 120°C im Vakuum getrocknet.

Ausbeute: 900 g eines schwarzbraunen klebrigen Harzes.
Basenstickstoff: 0,4 Gew.%
Stickstoff nach Kjedahl: 0,46 Gew.%
Staudingerindex Jo = 24,0
Ni-Gehalt: 0,03 Gew.%

f) 1200 g des nitrierten Polymerisats 3 (5 Gew.% Styrolgehalt) in 2800 g n-Octan werden nach Spülen mit Wasserstoff mit 2 g Nickelacetylacetonat in 20 cm³ Toluol versetzt und 5 Stunden bei 260°C und 300 atü hydriert. Nach Entspannen und Verdampfen des gelösten Ammoniaks wird über Bleicherde filtriert. Das Polymerisat wird durch Eingießen in das 3-fache Volumen Ethylalkohol gefällt, gewaschen und bei 120°C im Vakuum getrocknet.

Ausbeute: 1150 g eines schwarzbraunen klebrigen Harzes.
Basenstickstoff: 0,32 Gew.%
Stickstoff nach Kjedahl: 0,37 Gew.%
Staudingerindex Jo = 24,0
Ni-Gehalt: 0,047 Gew.%

## Herstellung von Polyurethanharzen

In 2 Versuchen werden je 5 g des hydrierten Polymeren a) in 30 cm³ Cyclohexan gelöst. Die Lösung wird mit 206 mg Diphenylmethan-4,4'-diisocyanat bzw. Hexanethylendiisocyanat (149 mg) gemischt, in ein flaches Gefäß aus Silikonkautschuk mit den Maßen 100 × 100 mm gegossen und bei 50°C das Lösungsmittel verdampft. Es bilden sich transparente, elastische, in Lösungsmitteln unlösliche Filme.

## Herstellung von epoxidgehärteten Harzen

In 2 Versuchen werden je 5 g des hydrierten Polymeren a in 30 cm³ Dichlormethan mit 371 mg Epicote 828 (Handelsname der Shell für Bisphenol-A-diglycidylether; Epoxidwert = 189) bzw. 236 mg Araldit MY 720 (Handelsname der Fa. Ciba Geigy für Tetraglycidylmethylendianilin. Epoxidwert = 120) gut durchgemischt und in eine Schale aus siliconiertem Papier gegossen. Nach einem Tag bei 100°C gehärtet, werden transparente, elastische in Lösungsmitteln unlösliche Filme erhalten.

## Ansprüche

1. Copolymerisate des Isobutylens, bestehend aus

a) 60 bis 99 Gew.-Teilen Isobutylen,

b) 0 bis 40 Gew.-Teilen eines Aminovinylaromaten und

c) 0 bis 40 Gew.-Teilen eines Nitrovinylaromaten

mit Molekulargewichten -bestimmt durch Gelpermeationschromatographie -von 700 bis 200 000, wobei die Summe der Gew.-Teile der Komponenten (b) und (c) gleich oder größer als eins und gleich oder kleiner als 40 sein muß.

2. Copolymerisate des Isobutylens nach Anspruch 1, bestehend aus

a) 60 bis 99 Gew.-Teilen Isobutylen und

b) 1 bis 40 Gew.-Teilen Aminostyrol.

3. Verfahren zur Herstellung der Copolymerisate des Isobutylens nach Anspruch 1, dadurch gekennzeichnet , daß das entsprechende Isobutylen-Vinylaromat-Copolymerisat zunächst nitriert und gegebenenfalls dann hydriert wird.

4. Verwendung der Aminogruppen enthaltenden Isobutylencopolymerisate nach Ansprüchen 1 und 2, gegebenenfalls in Mischung mit anderen

*Methode zur Bestimmung des Basenstickstoffes 2 g des Aminogruppen enthaltenden Polymeren werden in 80 cm³ Dichlorbenzol gelöst. Zu dieser Lösung werden 20 cm³ Eisessig gegeben. Die Lösung wird potentiometrisch mit 0,1 n Perchlorsäure in Eisessig titriert. Der Gehalt errechnet sich wie folgt:

Polymerisaten, zur Herstellung der entsprechenden Polyurethane bzw. Epoxidharze durch übliche Umsetzungen mit Diisocyanaten bzw. Epoxiden.